# EUROPEAN PATENT SPECIFICATION

(11) **EP 0 296 239 B1**
(45) Date of publication and mention of the grant of the patent: **29.12.1993**
(21) Application number: 88901342.1
(22) Date of filing: 11.01.1988
(51) Int. Cl.: B29D 30/54

(54) **PROCESS FOR RETREADING TIRES**
VERFAHREN ZUR RUNDERNEUERUNG VON REIFEN
PROCEDE DE RECHAPAGE DE PNEUS

(30) Priority: 12.01.1987 US 2576
(43) Date of publication of application: 28.12.1988
(73) Proprietor: THE HERCULES TIRE AND RUBBER COMPANY (a Connecticut corporation), Findlay, OH 45840 (US)
(72) Inventor: SHANK, Byron, E., Findlay, OH 45840 (US)
(74) Representative: Jones, Colin
(86) International application number: US8800012
(87) International publication number: WO8804988

(56) References cited:
- US-A- 4 756 782

## Description

This invention relates to a method for retreading tires, and in particular the use of an irradiated pre-cured gum in such process.

When the tread on an originally manufactured tire wears out, it is very common to place a new tread on the old casing. The retread process and the suppliers of the components for the process have become a significant industry because of the efficiencies involved. One of the most popular methods of retreading tires is to place gum around the circumference of a tire casing, cover it with a pre-cured tread, and cure the combination with heat and pressure. While this method is generally satisfactory, the time, cost and effectiveness of the pre-curing are major factors in the success of the retread process. A sample of such a process is shown in US-A-4,434,018. Industry practices have also been published by the Rubber Manufacturing Association, Inc. (RMA) in their bulletins, and in particular Bulletins Nos. 8, 10, 14, 18, 19, 23, and 25.

The process shown in the RMA bulletins typically uses a gum about 1.52 mm (0.060 in.) thick. It is pre-cured for about 7.5 minutes at about 138°C (280°F). When this is done, the gum meets industry standards of a tensile strength of 24.1 MPa (3500 psi), a 300% modulus of 7.24 MPa (1050 psi), and an elongation of 550%. Using the heat pre-cured gum, the final curing of the casing, gum, and tread typically takes about five hours.

Other methods include those described in US-A-3698975 and US-A-4176702.

US-A-3698975 describes a process which applies heat from a curing band through a pre-cured tread to cure the cushion gum intermediate the tread and tyre.

US-A-4176702 discloses a method of pre-curing the tread stock in which adhesion can be obtained by partially curing a tyre by electron irradiation and partially curing a tread stock by electron radiation. Both tread stock and tyre ply are compounded with sulphur and the two are put together under pressure and cured with heat.

The present invention includes a method which reduces by about 40% the time necessary to pre-cure the gum with heat and the time necessary for the final cure of the retread tyre. This reduction in pre-cure and cure time nearly doubles the output and capacity of a given amount of equipment and plant. Moreover, this invention reduces to about one-half the necessary thickness of the gum needed in the retread process. These decreases in time and material and increases in productivity are quantum jumps over the prior art.

This invention attains the lower cure times by irradiating the gum with nuclear radiation prior to its pre-cure. The gum is normally natural rubber with conventional additives which has been formed into strips, with a thin, strippable, thermoplastic covering on each side. The strip gum is passed in proximity to a nuclear source which changes the molecular bonding to a more stable form. Even though the gum is only about 0.76mm (0.030 inch) thick, it remains tacky following irradiation. The irradiated gum is then cured with heat for about 4 minutes instead of the usual 7-1/2 minutes. The final cure process of the tyre is about 3 hours instead of the previous 5 hours. The efficiencies are clear.

The process of preparing gum for retreading a tire casing includes the addition of additives to raw rubber to form a gum which can be formed into strips and pre-cured with radiation and heat. The gum is subsequently placed around a casing, a tread is placed over the gum, and the combination is finally cured with a combination of heat and pressure.

The invention comprises a process for precuring a gum, for use in retreading tyres, comprising subjecting said gum to irradiation with nuclear radiation.

It also includes a process of retreading a tyre comprising:
(a) preparing the surface of the casing of a tyre so that it does not have any significant defects that would interfere with its adhesion to the tread;
(b) irradiating a gum with nuclear radiation to at least partially cure the gum;
(c) placing the irradiated gum around the circumference of the casing;
(d) applying the pre-cured tread over the gum; and
(e) curing the tread and gum while on the casing.

The invention is further described with reference to the drawings in which:-
Fig. 1 illustrates a block diagram of the process of this invention;
Fig. 2 is a schematic representation of the nuclear radiation used in treating the gum;
Fig. 3 is a graphic representation of the degree of dosage versus penetration; and
Fig. 4 is a schematic representation of the final curing apparatus for a tyre.

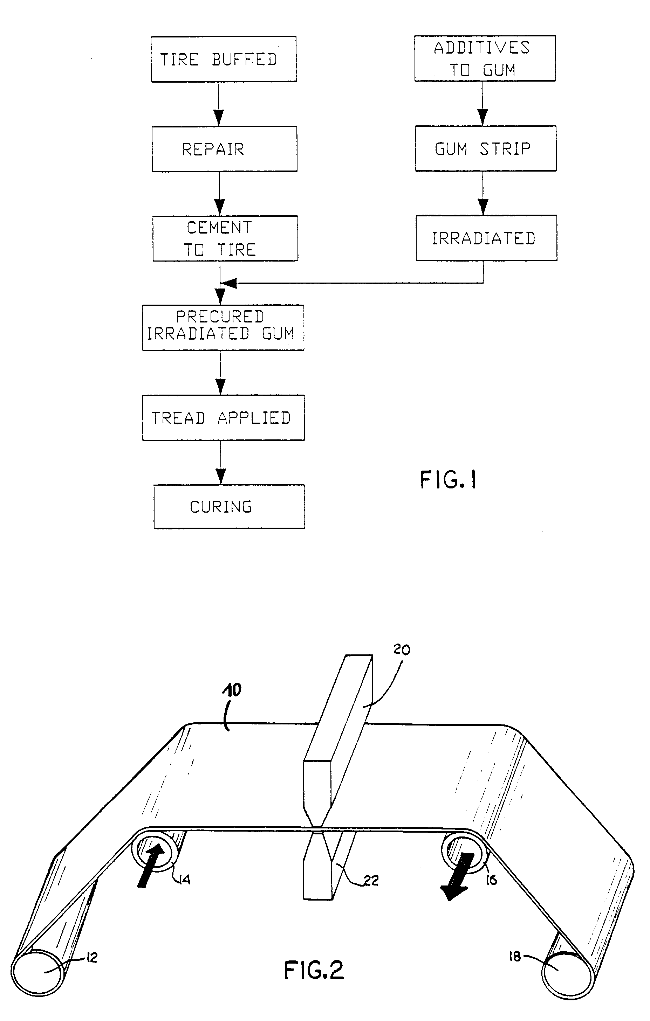

FIG. 1 illustrates a process of retreading a tire casing according to this invention. The tire is first buffed and repaired according to standard operating procedures which are well known in the art. An example of such procedure is set forth in Rubber Manufacturing Association, Inc. Bulletin No. 8. In general, the tires are first cleaned and inspected for foreign objects and for any type of leak or cut. The tire is then cleaned, repaired, and buffed. Buffing should be uniformly done and should avoid any damage to the casing.

Subsequently, a cement, such as Hercules Tire & Rubber Company's bonding cement, is placed on the tire in order to hold an irradiated gum in place. RMA Bulletin No. 10 is an example of such cementing process. Tread is cemented over the gum, and the combination is cured. In this particular invention, the gum is first formed into a strip and then irradiated.

The type of gum that may be used is available from Hercules Tire & Rubber Co., Model Ultra-Cushion 06. It includes natural rubber and conventional rubber additives such as carbon black, zinc oxide, stearic acid, antioxidant and antiozonant materials. Other gums would be operable in this process. Such gums can be polymers made from conjugated diene monomers containing From 9 to 12 carbon atoms, preferably from 4 to 6 carbon atoms, or in combination with a vinyl-substituted aromatic containing from 8 to 12 carbon atoms. Examples of specific diene monomers include butadiene, isoprene, pentadiene, hexadiene, etc., with butadiene and isoprene being preferred. An example of a preferred vinyl-substituted aromatic is styrene. A copolymer made from butadiene and styrene, that is, poly(butadiene-styrene), is also preferred. Previously, the gum was about 1.5 mm (.060 inch) thick. This was necessary in order to reach the desired degree of pre-curing while continuing to have tackiness. That is, the gum with the cement had to be sticky enough to hold the tread in place on the casing during the build-up of the tire and during the final curing process. The 1.5 mm (.060 inch) thick gum took about 7-1/2 minutes at 138°C (280°F) to cure to 90%. The final characteristics of the 90% cured gum included a tensile strength of about 241 bar (3500 psi), a 300% modulus of 72 bar (1050 psi), and an elongation of 550%. With these cured physical properties and with 90% pre-cured treads, the combination of the tread, gum and casing used to take about 5 hours for the final curing process. The final curing process, as well as the time and treatment of the pre-cured gum, was a major expense and time consideration in the preparation of retreaded tires.

As shown in FIG. 1, this invention has found that if the gum layer is first irradiated with nuclear radiation, the further pre-cure treatment of the gum, as well as the final curing process, are greatly reduced. The substantial increase in the efficiency of the process of forming retreaded tires greatly enhances the possible use of existing machinery as well as providing a superior product.

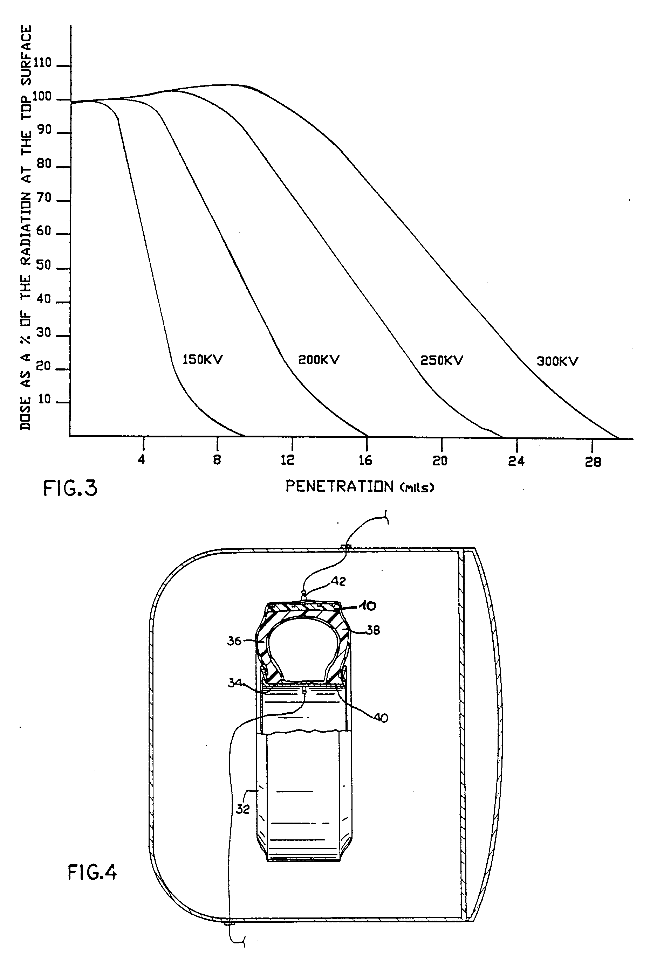

It is anticipated that there are several types of irradiation procedures and nuclear radiation that could be used with this invention. These would include without limitation electron and gamma radiation. As illustrated in FIG. 2, a strip of gum 10 preferably having thin sheets of thermoplastic on each side is passed between two sources of radiation 20 and 22. The thermoplastic sheets prevent adhesion of the gum to itself and other items during the pre-cure process. One source of radiation could be used if the strip were passed by it twice, once for each side. In the preferred embodiment, the radiation sources 20 and 22 are continuous electron beams delivering from 10-30 megarads on each side. Typically, twenty (20) megarads (10 per side) are delivered to a gum strip 0.76 mm (0.030 inch) thick. The amount of radiation actually delivered to the strip of gum will depend upon the intensity of the radiation and the speed and thickness of the strip of gum. While different combinations exist for irradiating the strip gum to the necessary pre-cured degree, one successful example has been to have the gum travel at 15.2 m per min (50 feet per minute) in an Electrocurtain™ machine built by Energy Sciences, Inc. It is anticipated that the gum may travel from 6.10 to 61.0 m per min (20 to 200 ft./min) and that intensities of radiation may be utilized. In one preferred embodiment, a window of 38.1 mm x 1.02 m (1-1/2 inches x 40 inches) is used with the source of radiation in order to focus the electron beams on either side of the gum strip. The size of the window will depend upon, and be greater than, the width of the strip being irradiated. The strip of gum 10 passes from a roll 12 over rollers 14 and 16 through which cooling fluid optionally may be utilized, since the radiation causes some heating of the gum. The gum is then rolled up on an out-going roller 18.

The intensity of the electron source depends upon the voltage and current utilized by the radiation source (FIG. 3). For example, 20 megarads (10 per side) would be delivered to a strip of gum traveling at 15.24 m per minute (50 feet per minute) and utilizing 100 milliamps in the above-noted machine. Whatever the parameters, it is imperative that molecular changes occur which act to pre-cure the gum. Such molecular changes are known (see, for example, US-A-4,221,253).

The irradiation of the strip of gum, results in a certain degree of pre-cure which manifests itself in the physical characteristics of the gum. The degree of pre-cure is verified by further curing a sample with heat to test the effectiveness of the radiation. Verification is achieved when the gum has the characteristics of a 90% cured gum as explained above.

The gum may be from 0.25 to 1.52 mm (10 to 60 mils) thick with appropriate voltages and currents applied to the source of radiation to give the partial cure that is needed. However, the thicker the gum, the more radiation is required and, accordingly, the gum should be made as thin as possible while still retaining the necessary physical and molecular characteristics to successfully work in the final curing process.

FIG. 3 illustrates a graph which shows the variation of dose on the Y axis with the depth of penetration on the X axis. In the graph, the top surface is considered 100%. The percentage of the dose of radiation at the top surface is plotted at different depths. For example, on the 150-kilovolt curve, there is only 50% of the radiation of the top surface at a depth of approximately 0.1 mm (4 mils). Accordingly, if greater depths of penetration are required, the voltage must be raised. Alternately, the current can be raised or the density of the gum can be changed. The particular example shown in FIG. 3 utilizes the type of gum illustrated in this invention. Obviously, the graphs will change with the differences in material.

After the irradiation treatment, the gum is then cured physically by placing it in an environment of about 121°C to 149°C (250°F to 300°F) for approximately 4 minutes. The time may be as low as 2 minutes and as high as 6 minutes if required. In practice, the cure time is significantly lower and almost half of the previous 7-1/2 minutes required for the same type of gum used for the same application. Accordingly, there is a significant reduction in time in the curing process by the use of irradiation.

Once the gum has been pre-cured by irradiation and heating, it has physical characteristics similar to gum which was heated For 7-1/2 minutes. That is, it has a tensile strength of from about 172 to about 241 bar (2500 to about 3500 psi), with approximately 207 bar (3000 psi) being preferred, a 300% modulus of about 55-83 bar (800-1200 psi), with 69 bar (1000 psi) being preferred, and an elongation of about 400-600,% with about 50% being preferred. In general, different times, speeds, doses, etc. may be used, but the gum should be about 90% cured after the irradiation and heat pre-curing.

Typically, the gum is then used by either the retread manufacturer or a retread dealer by stripping off the previously applied plastic from the gum and rolling it onto a casing that has been prepared. Pre-cured tread is then placed over the gum. Cement is used as known to the art. The final curing process may be done in any one of a number of processes. As particularly set forth in the Rubber Manufacturing Associated, Inc.'s pre-cured tread retreading Bulletin No. 28, there are at least five different types of chambers where final curing may occur. These chambers are known as a smooth matrix, an outside steam bag, a matrix chamber-envelope, a matrix chamber-diaphragm and a pressure chambers-envelope.

FIG. 4 is one example of the environment in which the final curing occurs. It is the type known as a "Pressure-Chambers Envelope." It includes a pressure chamber 30 applying air or fluid pressure to the outer wall 32 and having a tube 34 inside the tire 36. An envelope 38 surrounds the outside of the tire and is held in place by a rim 40. Air is exhausted through a valve 42 and line 44. Air pressure is supplied via line 46 and valve 48.

The tire shown in FIG. 4 was previously cured for approximately 5 hours. By utilizing the irradiation set forth in this description the final cure time has been reduced to approximately 3 hours. This 40% savings in time is a major step forward over the prior art, and is an unexpected result.

While the invention has been shown and described with respect to a particular embodiment thereof, this is for the purpose of illustration rather than limitation.

## Claims

1. A process for precuring a gum (10), for use in retreading tyres (36), comprising subjecting said gum (10) to irradiation with nuclear radiation (20,22).

2. A process of retreading a tyre comprising:
(a) preparing the surface of the casing of a tyre (36) so that it does not have any significant defects that would interfere with its adhesion to the tread;
(b) irradiating a gum (10) with nuclear radiation as claimed in claim 1 to at least partially cure the gum (10);
(c) placing the irradiated gum (10) around the circumference of the casing;
(d) applying the pre-cured tread over the gum (10); and
(e) curing the tread and gum (10) while on the casing.

3. The process of claim 1 or 2 wherein radiation changes the molecular bonds of the molecules.

4. The process of claim 1, 2 or 3, wherein the radiation is emitted in the form of a continuous electron beam.

5. The process of any of the preceding claims wherein the gum (10) has a thickness of from 0.25 to 1.52mm (10 to 60 mils).

6. The process of claim 5, wherein the gum (10) is from 0.25 to 0.76mm (10 to 30 mils) thick.

7. The process of the claim 6, wherein the gum (10) is from 0.51 to 0.76mm (20 to 30 mils) thick.

8. The process of claim 6 or 7, wherein the gum (10) is irradiated with a total of approximately 20 megarads.

9. The process of claim 8, wherein the gum (10) is irradiated with about 10 megarads per side.

10. The process of any of claims 6 to 9, wherein the tread, gum (10), and casing are cured from about 2 to 4 hours at 121 to 149°C (200 to 300°F).

11. The process of claim 10, wherein the tread, gum (10) and casing are cured for about 3 hours at 138°C (280°F).

12. The process of any of claims 6 to 11, wherein the gum (10) is irradiated on both sides.

13. The process of any of claims 6 to 11, wherein the gum (10) is irradiated by radiation sources on both sides of the gum.

14. The process of any preceding claim, wherein the gum (10) is heated to further pre-cure it.

15. The process of claim 14, wherein the gum (10) is irradiated and heated to a degree such that it has a tensile strength of from about 172 to 241 bar (2500 to 3500 psi), and a 300% modulus of about 72 bar (1050 psi).

16. The process of claim 15, wherein the irradiated gum (10) is pre-cured with heat from about 2 to 4 minutes 121 to 149°C (250 to 300°F).

17. The process of claim 16, wherein the irradiated gum (10) is cured with heat at about 130°C (280°F) for about 4 minutes.

## Patentansprüche

1. Verfahren zum Vorhärten eines Gummis (10) für den Gebrauch beim Runderneuern von Reifen (36), das den Schritt aufweist, den Gummi (10) einer Bestrahlung mit Kernstrahlung (20, 22) auszusetzen.

2. Verfahren zum Runderneuern eines Reifens, das die folgenden Schritte aufweist:
(a) Vorbereiten der Oberfläche des Mantels eines Reifens (36), so daß sie keine größeren Mängel aufweist, die ihr Haftvermögen an dem Profil beeinträchtigen würden,
(b) Bestrahlen eines Gummis (10) mit Kernstrahlung nach Anspruch 1, um den Gummi (10) wenigstens teilweise auszuhärten,
(c) Anordnen des bestrahlten Gummis (10) um den Umfang des Mantels herum,
(d) Anbringen des vorgehärteten Profils über dem Gummi (10) und
(e) Aushärten des Profils und des Gummis (10) auf dem Mantel.

3. Verfahren nach Anspruch 1 oder 2, bei welchem eine Strahlung die Molekülbindungen der Moleküle verändert.

4. Verfahren nach Anspruch 1, 2 oder 3, bei welchem die Strahlung in Form eines ununterbrochenen Elektronenstrahls emittiert wird.

5. Verfahren nach einem der vorhergehenden Ansprüche, bei welchem der Gummi (10) eine Dicke zwischen 0,25 und 1,52 mm (10 bis 60 Milli-Zoll) hat.

6. Verfahren nach Anspruch 5, bei welchem der Gummi (10) zwischen 0,25 und 0,76 mm (10 bis 30 Milli-Zoll) dick ist.

7. Verfahren nach Anspruch 6, bei welchem der Gummi (10) zwischen 0,51 und 0,76 mm (20 Die 30 Milli-Zoll) dick ist.

8. Verfahren nach Anspruch 6 oder 7, bei welchem der Gummi (10) mit insgesamt etwa 20 Megarad bestrahlt wird.

9. Verfahren nach Anspruch 8, bei welchem der Gummi (10) mit ungefähr 10 Megarad pro Seite bestrahlt wird.

10. Verfahren nach einem der Ansprüche 6 bis 9, bei welchem das Profil, der Gummi (10) und der Mantel etwa 2 bis 4 Stunden lang bei 121 bis 149 °C (200 bis 300 °F) ausgehärtet werden.

11. Verfahren nach Anspruch 10, bei weichem dar Profil, der Gummi (10) und der Mantel etwa 3 Stunden lang bei 138 °C (280 °F) ausgehärtet werden.

12. Verfahren nach einem der Ansprüche 6 bis 11, bei welchem der Gummi (10) auf beiden Seiten bestrahlt wird.

13. Verfahren nach einem der Ansprüche 6 bis 11, bei welchem der Gummi (10) durch Strahlungsquellen auf beiden Seiten des Gummis bestrahlt werden.

14. Verfahren nach einem vorhergehenden Anspruch, bei welchem der Gummi (10) zur weiteren Aushärtung erwärmt wird.

15. Verfahren nach Anspruch 14, bei welchem der Gummi (10) bin zu einem solchen Grad bestrahlt und erwärmt wird, daß er eine Zugfestigkeit zwischen 172 und 241 bar (2500 bis 3500 psi) und ein 300%-Modul von etwa 72 bar (1050 psi) hat.

16. Verfahren nach Anspruch 15, bei welchem der bestrahlte Gummi (10) etwa 2 bis 4 Minuten lang mit einer wärme von 121 bis 149 °C (250 bis 300 °F) vorgehärtet wird.

17. Verfahren nach Anspruch 16, bei welchem der bestrahlte Gummi (10) mit einer Wärme von etwa 130 °C (280 °F) etwa 4 Minuten lang ausgehärtet wird.

## Revendications

1. Procédé de prévulcanisation d'une gomme (10) utilisée pour le rechapage des pneus (36), dans lequel on soumet ladite gomme (10) à une irradiation par un rayonnement nucléaire (20, 22).

2. Procédé de rechapage d'un pneu, dans lequel:
a) on prépare la surface de l'enveloppe extérieure d'un pneu (36) pour qu'elle ne présente pas de défauts importants qui contrarieraient son adhésion à la chape,
b) on irradie une gomme (10) par un rayonnement nucléaire comme revendiqué dans la revendication 1, pour au moins partiellement vulcaniser la gomme (10),
c) on place la gomme (10) irradiée autour de la circonférence de l'enveloppe extérieure,
d) on applique la chape prévulcanisée sur la gomme (10) et
e) on vulcanise la chape et la gomme (10) alors qu'elles sont sur l'enveloppe extérieure.

3. Procédé selon l'une des revendications 1 ou 2, dans lequel l'irradiation change les liaisons moléculaires des molécules.

4. Procédé selon l'une des revendications 1, 2 ou 3, dans lequel les radiations sont émises sous la forme d'un faisceau continu d'électrons.

5. Procédé selon l'une des revendications précédentes, dans lequel la gomme (10) présente une épaisseur de 0,25 à 1,52 millimètre (mm) (0,01 à 0,06 pouce).

6. Procédé selon la revendication 5, dans lequel la gomme (10) a une épaisseur de 0,25 à 0,76 mm (0,01 à 0,03 pouce).

7. Procédé selon la revendication 6, dans lequel la gomme (10) a une épaisseur de 0,51 à 0,76 mm (0,02 à 0,03 pouce).

8. Procédé selon la revendication 6 ou 7, dans lequel la gomme subit une irradiation totale d'environ 20 mégarads.

9. Procédé selon la revendication 8, dans lequel la gomme (10) subit, par face, une irradiation d'environ 10 mégarads.

10. Procède selon l'une des revendications 6 à 9, dans lequel la chape, la gomme (10) et l'enveloppe extérieure sont vulcanisées pendant environ 2 à 4 heures entre 121 et 149°C (200 à 300°F).

11. Procédé selon la revendication 10, dans lequel la chape, la gomme (10) et l'enveloppe extérieure sont vulcanisées pendant environ 3 heures à 138°C (280°F).

12. Procédé selon l'une des revendications 6 à 11, dans lequel la gomme (10) est irradiée des deux côtés.

13. Procédé selon l'une des revendications 6 à 11, dans lequel la gomme (10) est irradiée par des sources radiatives des deux côtés de la gomme.

14. Procédé selon l'une des revendications précédentes, dans lequel la gomme (10) est chauffée pour encore la prévulcaniser.

15. Procédé selon la revendication 14, dans lequel la gomme (10) est irradiée et chauffée à un degré tel qu'elle a une limite élastique à la traction d'environ 172 à 241 bar (2500 à 3500 psi) et un module à 300 % d'environ 72 bar (1050 psi).

16. Procédé selon la revendication 15, dans lequel la gomme irradiée (10) est prévulcanisée à la chaleur pendant environ 2 à 4 minutes entre 121 et 149°C (250 à 300°F).

17. Procédé selon la revendication 16, dans lequel la gomme irradiée (10) est vulcanisée à la chaleur à environ 130°C (280°F) pendant environ 4 minutes.
